# EUROPEAN PATENT SPECIFICATION

(11) **EP 0 672 578 B1**
(45) Date of publication and mention of the grant of the patent: **10.01.2001**
(21) Application number: 94610015.3
(22) Date of filing: 17.03.1994
(51) Int. Cl.: B62J 6/00

(54) **A lamp and a set of lamps for detachable mounting on a tubular structure**
Lampe und Lampenanordnung mit lösbarer Verbindung mit einer rohrförmigen Struktur
Lampe et set de lampes montées détachables sur une structure tubulaire

(43) Date of publication of application: 20.09.1995
(73) Proprietor: Zoro & Manich (BVI) Ltd., Road Town, Tortola, British Virgin Islands (VG)
(72) Inventor: Beck, Lars, DK-2900 Hellerup (DK)
(74) Representative: Nielsen, Henrik Sten

(56) References cited:
- GB-A- 2 214 367
- US-A- 5 195 817

## Description

The present invention relates to a lamp for detachable mounting on a supporting struture including a tubular element for supporting the lamp, which supporting structure may constitute e.g. the frame of a bicycle, the body of a vehicle such as a car, the hull of a ship or an aeroplane or any similar structure or frame. The present invention, however, particularly relates to the technical field of lamps to be used in connection with bicycles.

Numerous bicycle lamp structures are known within the art such as from numerous patent specifications and design registrations. Examples of patent specifications in which bicycle lamps are described are published international patent application, publication No. WO91/00210, US patent No. 5,197,795 and published British patent application, publication No. 2,202,098.

Lamps to be detachably mounted on a supporting structure such as the frame or a part of the frame of a bicycle generally suffer from certain drawbacks since on the one hand the lamps have to be mounted on the frame of the bicycle by means of a separated holder device such as a receptor for receiving the bicycle lamp, and since, on the other hand, the lamps are very bulky and hard to store and carry along e.g. in a pocket or a suitcase. A further disadvantage relating to the prior art bicycle lamps relates to the sharpedged and bulky structure of the prior art bicycle lamps which may in some instances cause damage to e.g. a pocket in which the bicycle lamp is stored.

An object of the present invention is to provide a lamp for detachable mounting on a supporting structure such as the frame of a bicycle, including a tubular element for supporting the lamp, which lamp is adapted to be detachably mounted on the tubular element of the supporting structure in question without the necessity of employing separated holder elements or fixating means serving the purpose of mounting and fixating the lamp relative to the supporting structure, and which lamps may further be stored in an extremely compact manner without occupying much room and further without presenting outer sharp corners or edges which might cause damage to e.g. a pocked in which the lamp is stored.

A feature of the present invention relates to the fact that the lamp according to the present invention may be stored along with a similar lamp constituting a set of lamps including a head lamp and a tail lamp to be used on a bicycle which lamps employ the same fixation elements for fixating the lamps together and for fixating the lamps relative to the supporting structure such as the frame of a bicycle.

An advantage of the present invention relates to the fact that the lamp according to the present invention may be stored in a set of lamps including an additional lamp together providing a head lamp and a tail lamp to be used on a bicycle which set presents, in a storage state, a very compact body which is easily stored in e.g. a pocket.

The above object, the above feature and the above advantage together with numerous other objects, features and advantages, which will be evident from the below detailed description of preferred embodiments of the lamp according to present invention is obtained by means of a lamp for detachable mounting on a supporting structure including a tubular element for supporting the lamp, the lamp comprising:
a housing defining an outer surface and an inner chamber,
an electrically powered light generating means for generating visible light of a specific wave length or a specific wave length range, the light generating means being received within the inner chamber of the housing and being supported by the housing,
a battery supply means for supplying electrical power to the light generating means,
a switchable electrical connector means switchable between a first and a second state, the switchable electrical connector means establishing electrical conductive connection from the battery supply means to the light generating means in the first state for the supply of electrical power from the battery supply means to the light generating means, and the switchable electrical connector means disconnecting the electrical conductive connection in the second state,
the light generating means being adapted to irradiate the visible light from the lamp through the supply of electrical power to the light generating means,
a fixation means for detachably, fixating and mounting the lamp relative to the tubular element, the fixation means protruding from the outer surface of the housing,
an outer housing component protruding from the outer surface thereof and having dimensions resembling the dimensions of a segment of the tubular element, and
the fixation means and the outer housing component being spaced apart and arranged relative to the outer surface of the housing so as to allow the fixation means and the outer housing component to cooperate with a similar outer housing component and a similar fixation means, respectively, of a further lamp of similar structure for allowing the two lamps to be connected to one another.

According the the present invention, the fixation means of the lamp according to the present invention serves a dual purpose viz. firstly the purpose of fixating the lamp relative to the tubular element of the supporting structure such as the frame of a bicycle to which the lamp is to be detachably mounted and secondly the purpose of cooperating with the outer housing component of a similar lamp for connecting or linking the lamp together with the further or additional lamp providing a set of lamps including e.g. a head lamp and a tail lamp to be used on a bicycle.

In the present context, the lamp is being described in relation to its primary intentional application, viz. the application in connection with a bicycle which according to prescribed regulations has to be provided with a head lamp and a tail lamp at specific periods of time such as the periods of time after the sun has gone down in the afternoon or in the evening and before the sun raises again next morning. It is, however, to be understood that the present invention is by no means limited to the technical field of bicycles as it is solicited that the teachings of the present invention is applicable in connection with alternative applications involving detachable mounting of lamps on a supporting structure for providing a reliable and easy mounting of the lamp in question without emloying separate fixation means.

The fixation means and the outer housing component of the lamp according to the present invention may be positioned in any appropriate and convenient position relative to the housing fulfilling the basic requirements of the lamp according to the present invention, i.e. the requirement of detachable mounting of the lamp relative to the supporting structure allowing that the visible light generated by the electrically powered light generating means is irradiated from the lamp and the requirement of allowing the fixation means of the lamp to cooperate with the similar outer housing component of the further lamp for connecting the two lamps together. According to the presently preferred embodiment of the lamp according to the present invention, the outer surface of the housing constitutes one half of a closed, continuous and convex surface, the other half of which is constituted by the outer surface of the housing of the further lamp, and the fixation means and the outer housing component of the lamp are adapted to cooperate with the similar outer housing component and the similar fixation means, recpectively, of the further lamp for establishing the closed, continuous and convex outer surface.

The closed, continuous and convex surface presented by the two lamps being connected together may constitute any geometrically shaped surface including combinations of any geometrical surface elements such as the outer surface of a sphere, cube or rombohedron or similar body or combinations thereof for the provision of a closed, continuous and convex surface defining the outer surface of the two lamps being connected together.

Further according to the presently preferred embodiment of the lamp according to the present invention, the housing is made of a plastics material and includes a light transparent window for the irradiation of the visible light generated by the electrically powered light generating means. Alternatively, the housing may be made from e.g. metal such as aluminum, steel or any other appropriate material, and the light generating means may itself be positioned at the outer surface of the housing of the lamp and irradiating the visible light without transmitting the light through a light transparent window of the housing. The electrically powered light generating means may in accordance with the teachings of the present invention be constituted by any appropriate light generating means such as a filament bulb, a light diode, a flourescence lamp or similar light generating source.

The battery supply means may in accordance with the teachings of the present invention be constituted by one or more batteries such as conventional batteries or alternatively rechargable batteries, and may further alternatively be substituted by any electrical power supply means e.g. a power supply means for supplying electrical power to a plurality of lamps through electric wires interconnecting the lamps and the electrical power supply.

The switchable electrical connector means serves, according to the teachings of the present invention, the purpose of supplying electrical power from the battery supply means to the electrically powered light generating means in the first state and the purpose of disconnecting the supply of electrical power from the battery supply means to the electrically powered light generating means in the second state. The switchable electrical connector means preferably comprises a switch and further electrical wires interconnecting the battery supply means and the electrically powered light generating means through the switch.

According to a first embodiment of the lamp according the present invention, the switch is constituted by a manually operable on/off switch. According to a second embodiment of the lamp according the present invention, the switch is constituted by a microswitch protruding from the outer surface of the housing so as to be operated through contact with a tubular element to which the lamp is detachably mounted for causing the battery supply means to supply electrical power to the electrically powered light generating means through the microswitch provided the lamp is supported by the tubular element. Thus, as the lamp is mounted on the tubular element of the supporting structure to which the lamp is adapted to be mounted, the switchable electrical connector means is shifted and kept in its first state. As the lamp is removed from the tubular element of the supporting structure to which the lamp is detachably mounted, the switchable electrical connector means are switched to the second state.

In accordance with a third embodiment of the lamp according to the present invention, the switch is constituted by a microswitch protruding from the outer surface of the housing so as to be operated through contact with the outer surface of the housing of the further lamp and for causing the supply of electrical power from the battery supply means to the electrically powered light generating means through the microswitch to be interupted provided the lamp and the further lamp are connected together. Thus, provided the two lamps are connected together, the lamps are turned off as the microswitches of the two lamps are operated for switching the switchable electrical connector means to the second state.

According to a further or fourth embodiment of the lamp according to the present invention, the switch is constituted by a reed contact, and the switchable electrical connector means further comprises a magnetic element housed within the housing, which reed contact is adapted to be operated by means of a similar magnetic element of the further lamp for causing the supply of electrical power from the battery supply means to the electrically powered light generating means to be interrupted, provided the lamp and the further lamp are connected together, and which magnetic element is adapted to cooperate with a similar reed contact of the further lamp for causing the supply of electrical power from the battery supply means of the further lamp to the electrically powered light generating means of the further lamp to be interupted provided the lamp and the further lamp are connected together. The light generating means of the lamp according to the present invention may be adapted to irradiate light from any appropriate part of the housing of the lamp, e.g. through the light transparent window of the housing.

According to the presently preferred embodiment of the lamp according to the present invention, the outer housing component of the lamp includes the light transparent window, and the fixation means is constituted by a receptor clutch means which is adapted to cover a similar light transparent window of the similar outer housing component of the further lamp, and which light transparent window is adapted to be covered by a similar receptor clutch means of the furhter lamp provided the lamp the further lamp are connected together. Thus, according to the presently preferred embodiment of the lamp according to the present invention, the receptor clutch means of the two lamps cover and protect the light transparent window of the other lamp provided the two lamps are connected together.

The lamp according to the present invention may in accordance with its primary application constitute a bicycle lamp to be mounted on a substantially horizontal bar of a pair of handle bars, and the electrically powered light generating means of the lamp may be adapted to generate white or yellow light. Alternatively, the lamp may constitute a bicycle lamp to be mounted on a substantially vertically rod on which the saddle of the bicycle is mounted, and the electrically powered light generating means of the lamp may be adapted to generate red light. Further alternatively or additionally, the electrically powered light generating means may in accordance with specific requirements be adapted to generate light continuously or, alternatively, intermittently.

The present invention also relates to a set of lamps for detachable mounting on a supporting structure such as the frame of a bicycle, including tubular elements for supporting the lamp.

The above object, the above feature and the above advantage together with numerous other objects, features and advantages which will be evident from the below detailed description of preferred embodiments of the present invention are obtained by means of a set of lamps for detachable mounting on a supporting structure including tubular elements for supporting said lamps, said set of lamps comprising two lamps, each of said lamps comprising:
a housing defining an outer surface and an inner chamber,
an electrically powered light generating means for generating visible light of a specific wave length or a specific wave length range, said light generating means being received within said inner chamber of said housing and being supported by said housing,
a battery supply means for supplying electrical power to said light generating means,
a switchable electrical connector means switchable between a first and a second state, said switchable electrical connector means establishing electrical conductive connection from said battery supply means to said light generating means in said first state for the supply of electrical power from said battery supply means to said light generating means, and said switchable electrical connector means disconnecting said electrical conductive connection in said second state,
said light generating means being adapted to irradiate said visible light from said lamp through the supply of electrical power to said light generating means,
a fixation means for detachably, fixating and mounting said lamp relative to said tubular element, said fixation means protruding from said outer surface of said housing,
an outer housing component protruding from said outer surface thereof and having dimensions resembling the dimensions of a segment of said tubular element, and
said fixation means and said outer housing component being spaced apart,
said two lamps of said set of lamps being adapted to be connected to one another so as to allow said fixation means and said outer housing component of one of said lamps to cooperate with said outer housing component and said fixation means, respectively, of the other lamp.

The set of lamps basically comprises two lamps according to the present invention, which, consequently, preferably comprise any of the above described features of the lamp according to the present invention.

The present invention will now be further described with reference to the drawings in which
- fig. 1: is a perspective view of a first and presently preferred embodiment of a set of lamps to be used on a bicycle or a similar vehicle, including a head lamp and a tail lamp, illustrating the head and tail lamp in an assembled state,
- fig. 2: is a perspective view similar to the view of fig. 1, illustrating the set of lamps shown in fig. 1 in a disassembled state,
- fig. 3: is a perspective view of one of the lamps of the set of lamps shown in figs. 1 and 2 constituted by the head lamp, illustrating the lamp fixated to a tubular element or rod of a bicycle,
- fig. 4: is a schematic and sectional view of the set of lamps shown in figs. 1 and 2, also illustrating alternative applications of turn-on or turn-off switches of one of the lamps,
- figs. 5a and 5b: are perspective, sectional and partly broken-away views of the head and tail lamp, respectively, shown in figs. 1 and 2, illustrating specific elements of the respective lamps,
- fig. 6: is a perspective view of a lamp according to a second embodiment of a set of lamps according to the present invention,
- fig. 7: is a perspective view similar to the view of fig. 6, illustrating a slightly modified embodiment of the lamp according to the second embodiment of the set of lamps shown in fig. 6, and
- fig. 8: is a perspective view of a fourth embodiment of a set of lamps according to the present invention.

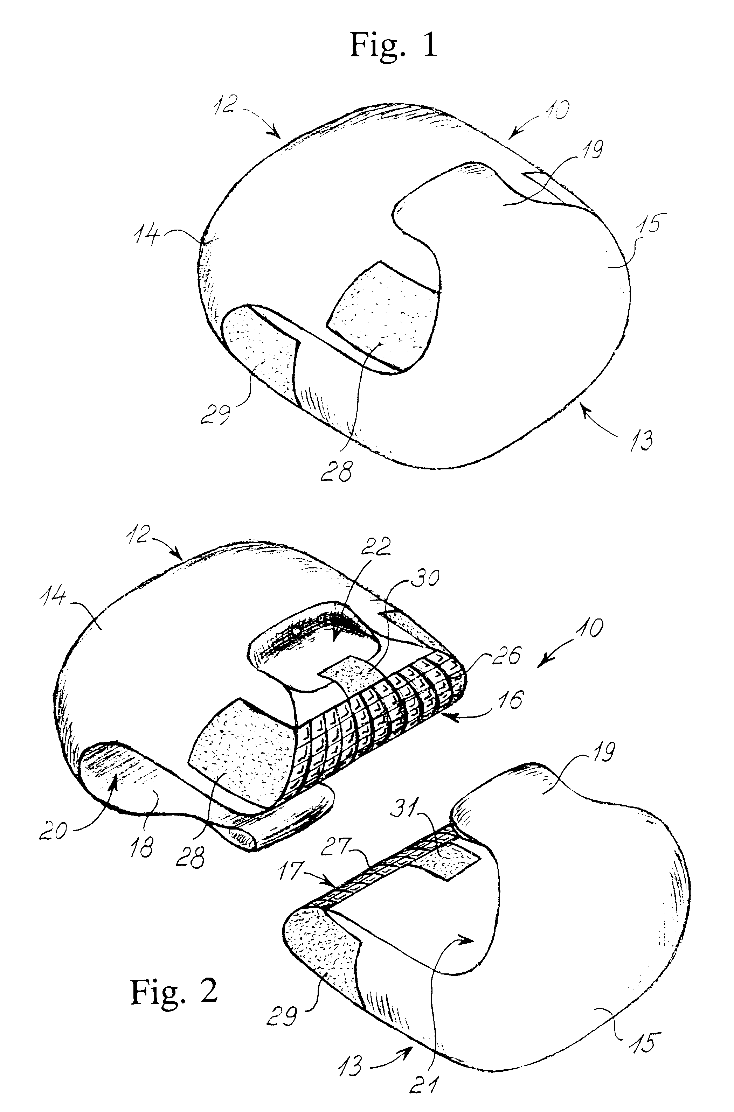

In fig. 1, a first and presently preferred embodiment of a set of lamps according to the present invention is shown. The set of lamps is in its entirety designated the reference numeral 10 and comprises two lamps of basically identical configuration, however constituting a head lamp 12 and a tail lamp 13, respectively, for generating white or yellow light and red light, respectively. The head lamp 12 and the tail lamp 13 fit together in an assembled state or configuration shown in fig. 1 in which the head lamp and the tail lamp together define a continuous outer surface of fairly small overall dimensions allowing that the head and rear lamps 12 and 13, respectively, may be stored together in e.g. a pocket of a jacket, a hand bag or suit case without occupying too much room and also without presenting outer sharp corners or edges which in some instances on the one hand might cause damage to the pocket or similar container in which the lamps are stored and on the other hand might obstruct the storing of the lamps.

The head light 12 and the rear lamp 13 are in fig. 2 shown in a disassembled state or configuration in which they are separated from one another, allowing that the lamps may be positioned at the front and the rear, respectively, of a bicycle or similar vehicle on which the lamps are to be mounted and used in accordance with the prescribed regulations at periods of time during which the vehicle has to be provided with front or head lamp and a rear or tail lamp.

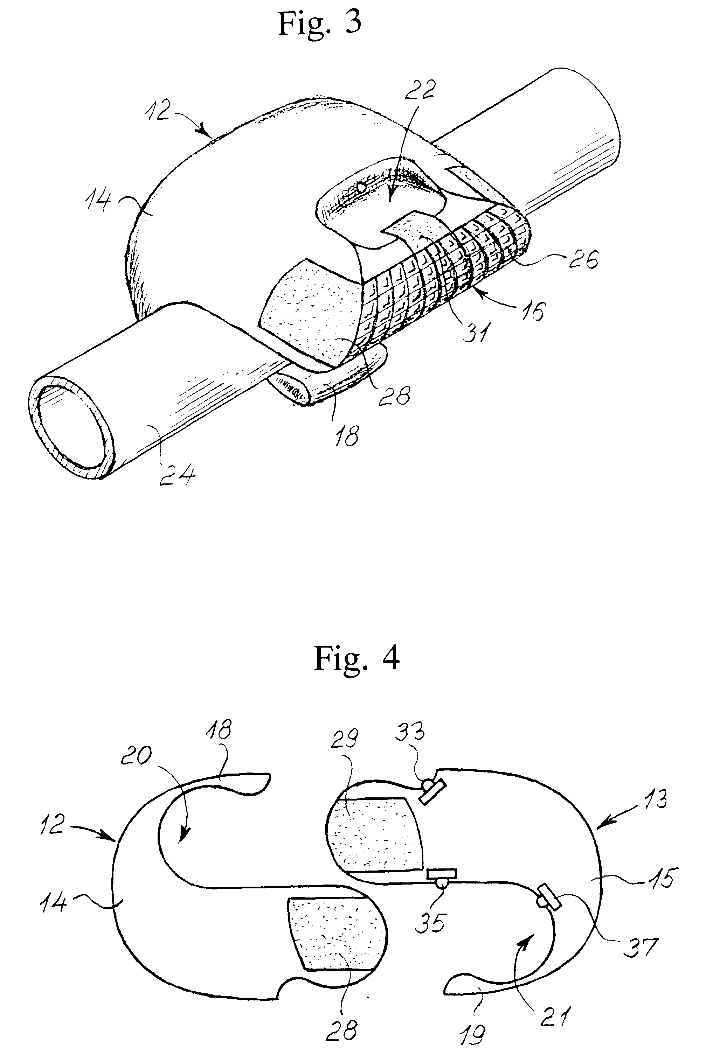

The head lamp 12 comprises a housing 14 made of e.g. a plastics material, such as ABS, POM or equivalent strong and elastic material, and of a configuration similar to and fitting with a similar housing 15 of the tail lamp 13 in the assembled state or configuration shown in fig. 1. The housing 14 of the head lamp 12 and the housing 15 of the tail lamp 13 are provided with apertures of identical configurations for receiving light-transparent and light-transmitting elements 16 and 17, respectively, for the transmission and radiation of white or yellow light and red light, respectively, from the head lamp 12 and the tail lamp 13, respectively. The light-transparent and light-transmitting elements 16 and 17 are of identical configurations, but have different light-transmitting properties and characteristics, as will be evident from the below description. The housing 14 of the head lamp 12 is provided with a flexible tongue part 18 defining a recess 20 within the housing 14 within which a rod or tubular element 24 of a bicycle may be received as illustrated in fig. 3 or in which the element 17 of the housing 15 of the tail lamp may be received in the assembled state shown in fig. 1.

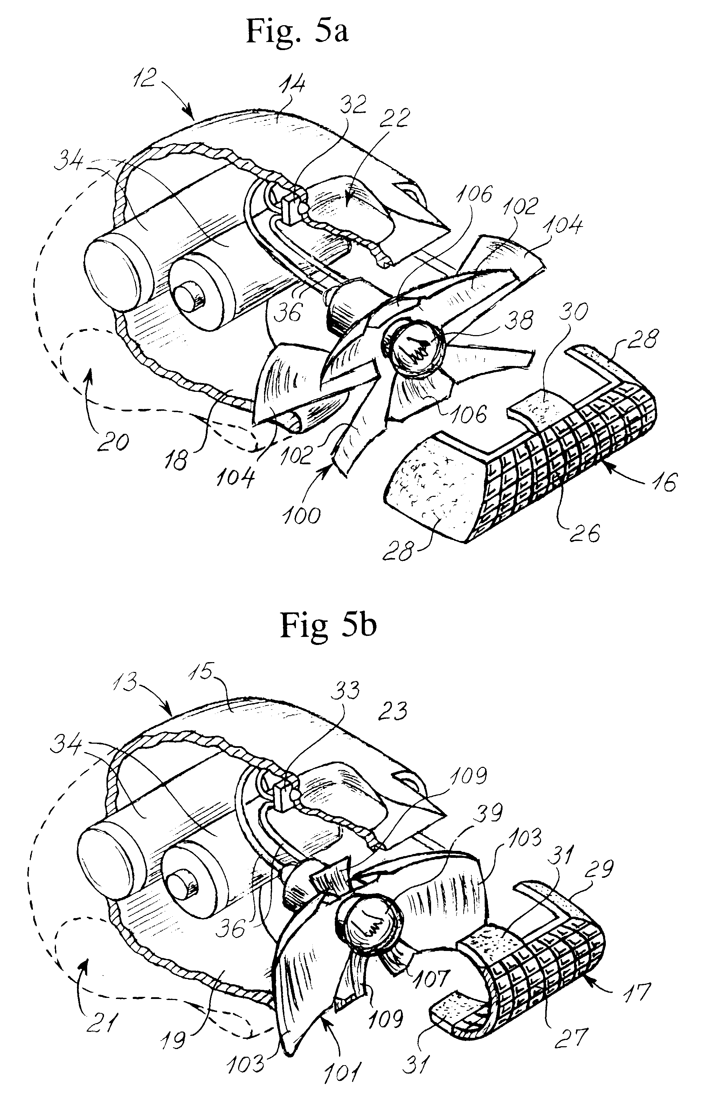

Similarly, the housing 15 of the tail lamp 13 is provided with a tongue 19 defining a recess 21 similar to the recess 20 of the head lamp 12. The outer free end of the tongue 18 and similarly the outer free end of the tongue 19 are provided with thickened parts provided for establishing a snap fitting effect as the head or tail lamp 12 and 13, respectively, are positioned on a respective tubular element or snapfitted together as shown in fig. 1. For receiving the tongue 19 of the housing 15 of the tail lamp 13, the housing 14 of the head lamp 12 is provided with a shallow top recess 22 in which the thickened outer part of the tongue 18 is received as the head and tail lamps 12 and 13 are fit together as shown in fig. 1. Similarly, the housing 15 of the tail lamp 13 is provided with a shallow recess 23 shown in Fig. 5b for receiving the thickened outer free end of the tongue 18 in the assembled state shown in fig. 1.

In fig. 3, the head lamp 12 is positioned in a snap fitting arresting position relative to a tubular element 24 which may constitute a horizontal bar of the handle bars of a bicycle. Similarly, the tubular element 24 may constitute a rod on which the saddle of the bicycle is supported for receiving the tail lamp 13 in a position similar to the position shown in fig. 3 in which the head lamp 12 is fixated and arrested relative to the tubular element 24.

The head lamp 12 and the tail lamp 13 differ from one another except for the colour of the light which is radiated from the lamp in question, as the head lamp 12 is adapted to be positioned on a substantially horizontal bar, whereas the tail lamp 13 is adapted to be positioned on a substantially vertical bar. The patterns of the radiation of light from the two lamps, the head lamp 12 and the tail lamp 13, have different configurations as the lamps have to radiate light which, in the intended position of the respective light, complies with the prescribed regulations, which in some countries of the world prescribe that the lamp is to be visible up to a distance of 300 m from the lamp, being the head lamp or the tail lamp, within an angle of 115° to both sides from the longitudinal axis of the lamp in question in the horizontal plane, whereas the lamp in question, being the head lamp or the tail lamp, should radiate light within a fairly small angle of 15° above the horizontal plan and 15° below the horizontal plane relative to the intended position of use of the lamp in question.

For radiating and beaming light from the elements 16 and 17 of the head lamp and tail lamp 12 and 13, respectively, the elements 16 and 17 are provided with facial parts of light-beaming and light-scattering structures, as illustrated by the elements designated the reference numerals 26 and 27, respectively.

For complying with the above-stated requirements of radiating light, which is visible within an angle of 115° relative to the longitudinal axis of the head lamp 12 within the horizontal plane of the head lamp 12 in the intended application of use of the head lamp, the element 16 is provided with side-wing elements 28, allowing that visible white or yellow light is radiated aside relative to the longitudinal axis of the head lamp 12. The element 17 of the tail lamp 13 is also provided with side-wing elements 29 similar to the elements 28 of the head lamp 12; the side-wing elements 29 of the element 17, however, serve no light-transmitting purpose, but the sole purpose of allowing that a housing of an identical structure may be used for the head lamp 12 and the tail lamp as the housings 14 and 15 of the head lamp and the tail lamp 12 and 13, respectively, are of identical structures.

For complying with the above requirement of radiating light which is visible within an angle of 115° to both sides relative to the longitudinal axis of the tail lamp 13 in the intended application of use of the tail lamp 13, in which application the tail lamp is turned 90° relative to the intended position of the head lamp 12, the element 17 of the tail lamp 13 is provided with light-transmitting wing elements 31, serving basically the same purpose as the side-wing elements 28 of the element 16 of the head lamp 12.

Like the element 17 of the tail lamp 13, which is provided with the side-wing elements 29, the element 16 of the head lamp 12 is provided with wing elements 30 which serve no light-transparent or light-transmitting purpose, but the sole purpose of structurally adapting the element 16 to the configuration of the housing 14, which, as stated above, is of an identical structure as compared to the housing 15.

The generation of white or yellow light and red light by the head lamp 12 and the tail lamp 13, respectively, may be realized by means of selecting a white or yellow and a red light-generating source, such as a white or yellow and a red lamp, respectively. Alternatively and preferably, the white or yellow light radiated by the head lamp is generated by means of a conventional filament light bulb transmitting white or yellow light, whereas the red light transmitted by the tail lamp 13 is generated by means of a similar filament light bulb generating white or yellow light which is transmitted through a coloured filtering element which may be constituted by the element 17 of the tail lamp 13. Different light sources, such as light diodes generating white or yellow light and red light, respectively, may alternatively be used.

In fig. 4, the head lamp 12 and the tail lamp 13 are shown in vertical sectional view. The contour of the housings 14 and 15 of the head and tail lamps 12 and 13, respectively, are shown as well as the contours of the light-transparent and light-transmitting elements 16 and 17 of the head and tail lamp 12 and 13, respectively. In fig. 4, three micro switches 33, 35 and 37 are also shown which serve the purpose of turning the tail lamp 13 on or off dependent on the position of the micro switch in question. The micro switches 33 and 35 are operated as the head and tail lamps 12 and 13 are assembled and consequently constitute turn off lamps causing the tail lamp 13 to the turned off as the head and tail lamps 12 and 13 are assembled in the state or configuration shown in fig. 1. Contrary to the the micro switches 33 and 35 which constitute turn off switches which in their non-operative positions allow the tail lamp 13 to radiate red light, the micro switch 37 constitutes a turn on switch which is operated as the tail lamp 13 is positioned and arrested relative to a rod or tubular element such as the tubular element 24 shown in fig. 3. In order to prevent that the head lamp 12 turns on the rear lamp 13 as the lamps are assembled in the state or configuration shown in fig. 1, the light-transparent and light-transmitting element 16 of the housing 14 of the head lamp 12 is provided with a recess in which the outwardly protruding switch element of the micro switch 37 is received as the head lamp and the rear lamp are assembled as shown in fig. 1. Apart from the micro switches 33, 35 and 37 of the tail lamp 13, the head lamp 12 is, of course, provided with similar micro switches, which, however, are not shown in the drawings. Alternative positions of the micro switches are of course also contemplated.

In figs. 5a and 5b, the head lamp 12 and the tail lamp 13, respectively, are shown in perspective sectional and partly broken away views, disclosing in greater details the interior of the head and tail lamps 12 and 13, respectively. The head lamp 12, shown in fig. 5a, includes a turn off micro switch 32 similar to the turn-off micro switch 33 of the tail lamp 13, shown in fig. 5b, and described above with reference to fig. 4. The turn off micro switches 32 and 33 are adapted to supply electrical power from two batteries, such as conventional IEC R6 batteries, to the light source of the lamp in question through electric wires 36 and solid wire connectors constituted by bronze plate elements. The light source of the head lamp 12 is constituted by a filament light bulb designated the reference numeral 38. Similarly, the light source of the tail lamp 13 is constituted by a filament light bulb designated the reference numeral 39.

The head and tail lamps 12 and 13, respectively, include a parabolic light-directing element designated the reference numeral 100 and 101, respectively. Basically, the parabolic light-directing element 100 and 101 are of identical basic structures, including two parabolic elements, the first thereof constituting two primary parabolic elements, designated the reference numeral 102 and 103, respectively, and the second therof constituting two secondary parabolic elements, designated the reference numeral 106 and 107, respectively. The parabolic elements of the head and tail lamps differ from one another in that the primary parabolic elements 102 of the head lamp are cut, providing rearwardly bended wings 104 which serve the purpose of directing light from the light bulb 38 within the above-mentioned angular pattern of 115° to both sides relative to the longitudinal axis of the head lamp within the horizontal plane of the head lamp 12.

The primary parabolic elements 103 of the light-directing element 101 of the tail lamp 13 are uncut like the secondary parabolic elements 106 of the light-directing element 100 of the head lamp 12. The secondary parabolic elements 107 of the light-directing element 101 of the tail lamp 13 are cut, providing rearwardly bended wings 109 serving the same purpose as the wings 104 of the light-directing element 100 of the head lamp 12, viz. the purpose of fulfilling the above requirements as to horizontal light distribution pattern of the tail lamp in the intended application of the tail lamp 13, in which application the tail lamp 13 is turned 90° relative to the orientation of the head lamp 12 in its intended application.

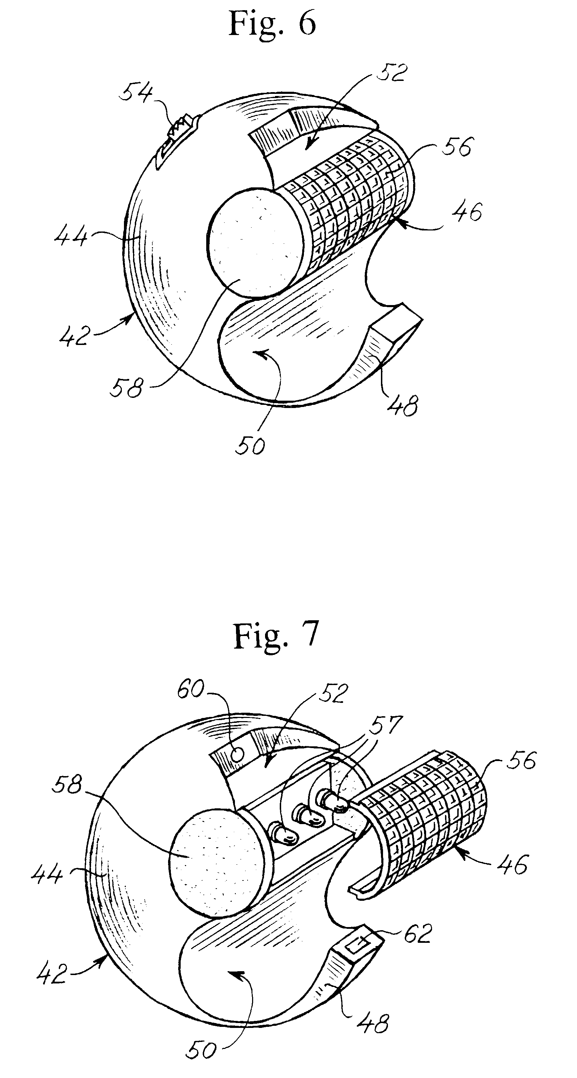

In fig. 6, a second embodiment of a head lamp of a set of lamps according to the present invention is shown, designated the reference numeral 42 in its entirety. It is to be understood that apart from the head lamp 42, shown in fig. 6, the set of lamps according to the second embodiment of the present invention comprises a tail lamp, not shown in fig. 6, of a structure basically identical to the structure of the head lamp 42, shown in fig. 6, but differing from the head lamp 42 shown in fig. 6 in the same way as the tail lamp 13 described above with reference to figs. 1, 2, 4 and 5b differs from the head lamp 12 described above with reference to figs. 1, 2, 3 and 5a. The head lamp 42 comprises a housing constituting a substantially half-spheric body in which a light-transparent and light-transmitting element 46 is received. The light-transparent and light-transmitting element 46 has a configuration and has an outer diametrical dimension substantially similar to the outer diameter of the horizontal bar of the handle bars of a bicycle on which the head lamp 42 may be applied.

Like the above-described head lamp 12, the head lamp 42 includes a snap-locking tongue 48 for gripping round the horizontal bar of the handle bars of the bicycle or alternatively round a light-transparent and light-transmitting element of the tail lamp similar to the light-transparent and light-transmitting element 46 of the head lamp 42. Within the tongue 48, a recess 50 is defined for receiving the above horizontal bar or alternatively the above-described light-transparent and light-transmitting element of the tail lamp.

Like the above-described head lamp 12, the head lamp 42 is further provided with a shallow top recess 52 for receiving the outermost end of a tongue of the housing of the tail lamp similar to the outermost end of the tongue 48. For turning the light source housed within the housing 44 of the head lamp 42 on and off, a turn-on/turn-off switch 54 is provided. The light-transparent and light-transmitting element 46 of the head lamp 42 is provided with beam-directing elements, one of which is designated the reference numeral 56, and further provided with two transparent side elements, one of which is designated the reference numeral 58 and fulfills the same purpose as the side-wing elements 28 of the head lamp 12 described above.

In fig. 7, a slightly modified embodiment of the above-described second embodiment of the head lamp is shown, which differs from the embodiment described above with reference to fig. 6 in that the turn-on/turn-off switch 54 is omitted. Instead, the slightly modified embodiment 42 shown in fig. 7 is provided with a reed contact 60 and a magnetic element 62 which components are adapted to cooperate with a magnetic element and a reed contact, respectively, of the tail lamp, not shown in fig. 7, which tail lamp constitutes the second lamp of the set of lamps, including the head lamp 42.

Provided the head lamp 42 is in its assembled state, similar to the state shown in fig. 1 with the tail lamp, the magnetic element of the tail lamp activates the reed contact 60 of the head lamp 42 and turns off the light source of the head lamp 42, which light source is constituted by three light-emitting diodes 57 which irradiate yellow light. Similarly, the magnetic element 62 of the head lamp 42 co-operates with the reed contact of the tail lamp and turns off the light source of the tail lamp, which is preferably constituted by a set of light-emitting diodes irradiating red light.

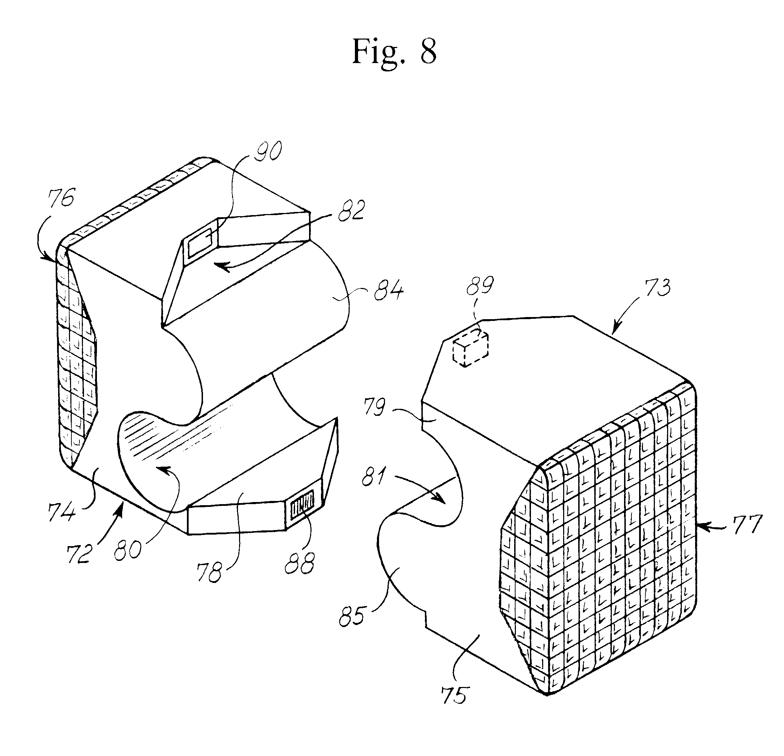

In fig. 8, a fourth embodiment of a set of lamp according to the present invention is shown. The set of lamps comprises a head lamp 72 and a tail lamp 73. The head and tail lamps 72 and 73, respectively, each comprises a housing 74 and 75, respectively, which may be fitted together, providing a compact cubic set of lamps, which is easily stored within e.g. a pocket of a jacket. In fig. 8, the head and tail lamps 72 and 73, respectively, are shown in their disassembled state. At opposite outer walls of the housing 74 and 75, the head and tail lamps 72 and 73, respectively, are provided with light-transparent and light-transmitting elements 76 and 77, respectively, similar to the elements 16 and 17 of the head and tail lamps 12 and 13, respectively, described above in greater detail.

For gripping round a bar of a bicycle, such as a horizontal bar of the handle bars of the bicycle or the rod on which the saddle is mounted, the housings 74 and 75 are provided with tongues 78 and 79 similar to the tongues 18 and 19, respectively, described above. Within the tongues 78 and 79, two recesses 80 and 81, respectively, are provided for receiving the rod on which the lamp in question is to be mounted, or alternatively a cylindrical wall element 85 and 84, respectively, of the opposite housings 75 and 74, respectively.

Like the above-described, slightly modified embodiment shown in fig. 7, the fourth embodiment shown in fig. 8 includes co-operating magnetic elements and reed contacts as the tongue 78 of the head lamp 72 is provided with a magnetic element 88 for co-operating with a reed contact, not shown in fig. 8, of the tail lamp 73 for effecting a turn off of the light source of the tail lamp 73, provided the head and tail lamps 72 and 73, respectively are in an assembled state or configuration similar to the state or configuration shown in fig. 1. The tail lamp 73 is provided with a magnetic element 89 similar to the above-described element 88 for co-operating with a reed contact 90 of the head lamp 72.

### EXAMPLE 1

A prototype implementation of the above-described first and presently preferred embodiment of the set of lamps shown in figs. 1-5 is made from the following components: The housings 14 and 15 of the head and tail lamps 12 and 13, respectively, are cast from POM. The two lamps constituted by the head lamp 12 and the tail lamp 13 together define a body with the configuration shown in fig. 1 of an overall maximum dimension constituting the length of the body of 76 mm, a maximum width of the body of 60 mm, and a maximum heigth of the body of 54 mm. Each of the two lamps, the head lamp 12 and the tail lamp 13, has an overall length of 63 mm, a maximum width of 60 mm and a maximum height of 54 mm. The light-transparent and light-transmitting elements 16 and 17 of the head and tail lamps 12 and 13, respectively are made from PMMA or PC. Each of the lamps of the set of lamps includes two IEC R6 batteries and a 1.5 V DC light bulb (250 mA). The light-directing elements 100 and 101 of the head and tail lamps 12 and 13, respectively are made from metallized PMMA or PP. The primary parabolic elements 102 and 103 of the head and tail lamps 12 and 13, respectively, each defines a focal length of 7.25 mm, and each of the secondary parabolic elements 106 and 107 of the head and tail lamp 12 and 13, respectively, defines a focal length of 3.4 mm.

Although the present invention has been described above with reference to specific, presently preferred embodiments of a set of lamps implemented in accordance with the teachings of the present invention, the above disclosure is by no means to be construed limiting the protective scope of the present invention as numerous modifications and amendments are obvious for a person having ordinary skill in the art without departing from the scope of the present invention which modifications and amendments are to be considered parts of the present invention.

## Claims

1. A lamp (110) for detachable mounting on a supporting structure including a tubular element for supporting said lamp, said lamp comprising:
a housing (114, 115) defining an outer surface and an inner chamber,
an electrically powered light generating means for generating visible light of a specific wave length or a specific wave length range, said light generating means being received within said inner chamber of said housing (114, 115) and being supported by said housing (114, 115),
a battery supply means for supplying electrical power to said light generating means,
a switchable electrical connector means switchable between a first and a second state, said switchable electrical connector means establishing electrical conductive connection from said battery supply means to said light generating means in said first state for the supply of electrical power from said battery supply means to said light generating means, and said switchable electrical connector means disconnecting said electrical conductive connection in said second state,
said light generating means being adapted to irradiate said visible light from said lamp through the supply of electrical power to said light generating means,
a fixation means for detachably, fixating and mounting said lamp relative to said tubular element, said fixation means protruding from said outer surface of said housing (114, 115),
an outer housing component (116, 117) protruding from said outer surface thereof and having dimensions resembling the dimensions of a segment of said tubular element, and
said fixation means and said outer housing component (116, 117) being spaced apart and arranged relative to said outer surface of said housing (114, 115) so as to allow said fixation means and said outer housing component (116, 117) to cooperate with a similar outer housing component (116, 117) and a similar fixation means, respectively, of a further lamp of similar structure for allowing said two lamps (112, 113) to be connected to one another.

2. The lamp (110) according to Claim 1, said outer surface of said housing (114, 115) constituting one half of a closed, continuous and convex surface, the other half of which is constituted by the outer surface of the housing (114, 115) of said further lamp, and said fixation means and said outer housing component (116, 117) of said lamp being adapted to cooperate with said similar outer housing component (116, 117) and said similar fixation means, respectively, of said further lamp for establishing said closed, continuous and convex outer surface.

3. The lamp according to Claim 2, said closed, continuous and convex surface being constituted by the outer surface of a sphere, a cube, a rhombohedron or similar body or combinations thereof.

4. The lamp according to any of the Claims 1-3, said housing (114, 115) being made of a plastics material and including a light transparent window for the irradiation of said visible light generated by said electrically powered light generating means.

5. The lamp according to any of the Claims 1-4, said electrically powered light generating means being constituted by a filament bulb, a light diode or similar light generating source.

6. The lamp according to any of the Claims 1-5, said battery supply means being constituted by one or more batteries, such as conventional batteries or alternatively rechargeable batteries.

7. The lamp according to any of the Claims 1-6, said switchable electrical connector means comprising a switch and electrical wires interconnecting said battery supply means and said electrically powered light generating means through said switch.

8. The lamp according to Claim 7, said switch being constituted by a manually operable on/off switch.

9. The lamp according to Claim 7, said switch being constituted by a microswitch protruding from said outer surface of said housing (114, 115) so as to be operated through contact with said tubular element for causing said battery supply means to supply electrical power to said electrically powered light generating means through said microswitch provided said lamp is supported by said tubular element.

10. The lamp according to Claim 7, said switch being constituted by a microswitch protruding from said outer surface of said housing (114, 115) so as to be operated through contact with the outer surface of the housing (114, 115) of said further lamp for causing the supply of electrical power from said battery supply means to said electrically powered light generating means through said microswitch to be interrupted provided said lamp and said further lamp are connected together.

11. The lamp according to Claim 7, said switch being constituted by a reed contact, and said switchable electrical connector means further comprising a magnetic element housed within said housing (114, 115), said reed contact being adapted to be operated by means of a similar magnetic element of said further lamp for causing the supply of electrical power from said battery supply means to said electrically powered light generating means to be interrupted provided said lamp and said further lamp are connected together, and said magnetic element being adapted to cooperate with a similar reed contact of said further lamp for causing the supply of electrical power from the battery supply means of said further lamp to the electrically powered light generating means of said further lamp to be interrupted provided said lamp and said further lamp are connected together.

12. The lamp according to Claim 4, said outer housing component (116, 117) including said light transparent window and said fixation means being constituted by a receptor clutch (118, 119) means, said receptor clutch (118, 119) means being adapted to cover a similar light transparent window of said similar outer housing component (116, 117) of said further lamp, and said light transparent window being adapted to be covered by a similar receptor clutch (118, 119) means of said further lamp provided said lamp and said further lamp are connected together.

13. The lamp according to any of the Claims 1-12, said lamp being a bicycle lamp to be mounted on a substantially horizontal bar of a pair of handle bars, and said electrically powered light generating means generating white or yellow light.

14. The lamp according to any of the Claims 1-12, said lamp being a bicycle lamp to be mounted on a substantially vertical rod on which a saddle of the bicycle is mounted, and said electrically powered light generating means generating red light.

15. The lamp according to any of the Claims 1-14, said electrically powered light generating means being adapted to generate light continuously or, alternatively, intermittently.

16. A set of lamps (112, 113) for detachable mounting on a supporting structure including tubular elements for supporting said lamps (112, 113), said set of lamps (112, 113) comprising two lamps (112, 113), each of said lamps (112, 113) comprising:
a housing (114, 115) defining an outer surface and an inner chamber,
an electrically powered light generating means for generating visible light of a specific wave length or a specific wave length range, said light generating means being received within said inner chamber of said housing (114, 115) and being supported by said housing (114, 115),
a battery supply means for supplying electrical power to said light generating means,
a switchable electrical connector means switchable between a first and a second state, said switchable electrical connector means establishing electrical conductive connection from said battery supply means to said light generating means in said first state for the supply of electrical power from said battery supply means to said light generating means, and said switchable electrical connector means disconnecting said electrical conductive connection in said second state,
said light generating means being adapted to irradiate said visible light from said lamp through the supply of electrical power to said light generating means,
a fixation means for detachably, fixating and mounting said lamp relative to said tubular element, said fixation means protruding from said outer surface of said housing (114, 115),
an outer housing component (116, 117) protruding from said outer surface thereof and having dimensions resembling the dimensions of a segment of said tubular element, and
said fixation means and said outer housing component (116, 117) being spaced apart,
said two lamps (112, 113) of said set of lamps (112, 113) being adapted to be connected to one another so as to allow said fixation means and said outer housing component (116, 117) of one of said lamps (112, 113) to cooperate with said outer housing component (116, 117) and said fixation means, respectively, of the other lamp.

17. The set of lamps (112, 113) according to Claim 16, each of said lamps (112, 113) of said set of lamps (112, 113) comprising any of the features of the lamp according to any of the Claims 2-15.

## Patentansprüche

1. Lampe (110) zu abnehmbarer Montierung an einer Tragkonstruktion mit einem Rohrelement zur Unterstützung der Lampe, wobei die Lampe folgendes umfasst:
ein Gehaüse (114, 115), das eine Aussenfläche und eine Innenkammer definiert,
ein elektrisch versorgtes lichterzeugendes Mittel zur Erzeugung sichtbaren Lichts einer spezifischen Wellenlänge oder eines spezifischen Wellenlängenbereichs, wobei das lichterzeugende Mittel innerhalb der Innenkammer des Gehäuses (114, 115) aufgenommen und vom Gehäuse (114, 115) unterstützt wird,
ein Batterieversorgungsmittel zur Versorgung des lichterzeugenden Mittels mit Strom,
ein schaltbares elektrisches Steckermittel, das zwischen einem ersten und einem zweiten Zustand schaltbar ist, wobei das elektrische Steckermittel eine elektrisch leitende Verbindung zwischen dem Batterieversorgungsmittel und dem lichterzeugenden Mittel im ersten Zustand zur Versorgung des lichterzeugenden Mittels mit Strom aus dem Batterieversorgungsmittel herstellt, und wobei das schaltbare elektrische Steckermittel im zweiten Zustand die elektrisch leitende Verbindung unterbricht,
wobei das lichterzeugende Mittel durch die Versorgung des lichterzeugenden Mittels mit Strom zur Ausstrahlung des sichtbaren Lichts der Lampe eingerichtet ist,
ein Befestigungsmittel zu abnehmbarer Befestigung und Montierung der Lampe gegenüber dem Rohrelement, wobei das Befestigungsmittel aus der Aussenfläche des Gehäuses (114, 115) vorsteht,
ein Aussengehäuseteil (116, 117), das aus dessen Aussenfläche vorsteht und Bemessungen hat, die den Bemessungen eines Segments des Rohrelements ähnlich sind, und
wobei das Befestigungsmittel und das Aussengehäuseteil (116, 117) auf Abstand voneinander gehalten und gegenüber der Aussenfläche des Gehäuses (114, 115) angeordnet sind, um das Befestigungsmittel und das Aussengehäuseteil (116, 117) mit einem ähnlichen Aussengehäuseteil (116, 117) bzw. einem ähnlichen Befestigungsmittel einer weiteren Lampe einer ähnlichen Struktur zusammenarbeiten zu lassen, um die beiden Lampen miteinander zu verbinden.

2. Lampe (110) nach Anspruch 1, dadurch gekennzeichnet, dass die Aussenfläche des Gehäuses (114, 115) die eine Hälfte einer geschlossenen, kontinuierlichen und konvexen Fläche darstellt, deren andere Hälfte aus der Aussenfläche des Gehäuses (114, 115) der weiteren Lampe besteht, und wobei das Befestigungsmittel und das Aussengehäuseteil (116, 117) der Lampe dazu eingerichtet sind, mit dem ähnlichen Aussengehäuseteil (116, 117) bzw. dem ähnlichen Befestigungsmittel der weiteren Lampe zusammenzuarbeiten, um die geschlossene, kontinuierliche und konvexe Fläche zu etablieren.

3. Lampe nach Anspruch 2, dadurch gekennzeichnet, dass die geschlossene, kontinuierliche und konvexe Fläche aus der Aussenfläche einer Kugel, eines Würfels, eines Rhomboeders oder eines ähnlichen Körpers oder Kombinationen davon besteht.

4. Lampe nach einem der Ansprüche 1 bis 3, dadurch gekennzeichnet, dass das Gehäuse (114, 115) aus einem Kunststoffmaterial hergestellt ist und ein lichtdurchlässiges Fenster zur Ausstrahlung des vom elektrisch versorgten lichterzeugenden Mittel erzeugten sichtbaren Lichts enthält.

5. Lampe nach einem der Ansprüche 1 bis 4, dadurch gekennzeichnet, dass das elektrisch versorgte lichterzeugende Mittel aus einer Glühlampe, einer Lichtdiode oder einer ähnlichen lichterzeugenden Quelle besteht.

6. Lampe nach einem der Ansprüche 1 bis 5, dadurch gekennzeichnet, dass das Batterieversorgungsmittel aus einem oder mehr Batterien, z.B. konventionellen Batterien oder alternativ wiederaufladbaren Batterien, besteht.

7. Lampe nach einem der Ansprüche 1 bis 6, dadurch gekennzeichnet, dass das schaltbare elektrische Steckermittel einen Schalter und elektrische Kabel umfasst, die durch den Schalter das Batterieversorgungsmittel mit dem elektrisch versorgten lichterzeugenden Mittel verbinden.

8. Lampe nach Anspruch 7, dadurch gekennzeichnet, dass der Schalter aus einem handbedienten Ein-Aus-Schalter besteht.

9. Lampe nach Anspruch 7, dadurch gekennzeichnet, dass der Schalter aus einem Mikroschalter besteht, der aus der Aussenfläche des Gehäuses (114, 115) vorsteht, um durch den Kontakt mit dem Rohrelement betrieben zu werden, um durch den Mikroschalter die Versorgung des elektrisch versorgten lichterzeugenden Mittels mit Strom aus dem Batterieversorgungsmittel zu unterbrechen, unter der Voraussetzung, dass die Lampe vom Rohrelement unterstützt wird.

10. Lampe nach Anspruch 7, dadurch gekennzeichnet, dass der Schalter aus einem Mikroschalter besteht, der aus der Aussenfläche des Gehäuses (114, 115) vorsteht, um durch den Kontakt mit der Aussenfläche des Gehaüses (114, 115) der weiteren Lampe betrieben zu werden, um durch den Mikroschalter die Versorgung des elektrisch versorgten lichterzeugenden Mittels mit Strom aus dem Batterieversorgungsmittel zu unterbrechen, unter der Voraussetzung, dass die Lampe und die weitere Lampe miteinander verbunden sind.

11. Lampe nach Anspruch 7, dadurch gekennzeichnet, dass der Schalter aus einem Reed-Relais besteht, und wobei das schaltbare elektrische Steckermittel ausserdem ein magnetisches Element umfasst, das im Gehäuse (114, 115) untergebracht ist, wobei das Reed-Relais dazu eingerichtet ist, mittels eines ähnlichen magnetischen Elements der weiteren Lampe betrieben zu werden, um die Versorgung des elektrisch versorgten lichterzeugenden Mittels mit Strom aus dem Batterieversorgungsmittel zu unterbrechen, unter der Voraussetzung, dass die Lampe und die weitere Lampe miteinander verbunden sind, und wobei das magnetische Element dazu eingerichtet ist, mit einem ähnlichen Reed-Relais der weiteren Lampe zusammenzuarbeiten, um die Versorgung des elektrisch versorgten lichterzeugenden Mittels der weiteren Lampe mit Strom aus dem Batterieversorgungsmittel zu unterbrechen, unter der Voraussetzung, dass die Lampe und die weitere Lampe miteinander verbunden sind.

12. Lampe nach Anspruch 4, dadurch gekennzeichnet, dass das Aussengehäuseteil (116, 117) das lichtdurchlässige Fenster umfasst, und wobei das Befestigungsmittel aus einem Aufnahmeklauenmittel (118, 119) besteht, wobei das Aufnahmeklauenmittel (118, 119) dazu eingerichtet ist, ein ähnliches lichtdurchlässiges Fenster des ähnlichen Aussengehäuseteils (116, 117) der weiteren Lampe zu decken, und wobei das lichtdurchlässige Fenster dazu eingerichtet ist, von einem ähnlichen Aufnahmeklauenmittel (118, 119) der weiteren Lampe gedeckt zu werden, unter der Voraussetzung, dass die Lampe und die weitere Lampe miteinander verbunden sind.

13. Lampe nach einem der Ansprüche 1 bis 12, dadurch gekennzeichnet, dass die Lampe eine Fahrradlampe ist, die an einer im wesentlichen horizontalen Stange eines Paares Handstangen zu montieren ist, und wobei das elektrisch versorgte lichterzeugende Mittel weisses oder gelbes Licht erzeugt.

14. Lampe nach einem der Ansprüche 1 bis 12, dadurch gekennzeichnet, dass die Lampe eine Fahrradlampe ist, die an einer im wesentlichen vertikalen Stange zu montieren ist, an der ein Sattel des Fahrrads montiert ist, und wobei das elektrisch versorgte lichterzeugende Mittel rotes Licht erzeugt.

15. Lampe nach einem der Ansprüche 1 bis 14, dadurch gekennzeichnet, dass das elektrisch versorgte lichterzeugende Mittel zu kontinuierlicher oder alternativ diskontinuierlicher Erzeugung von Licht eingerichtet ist.

16. Satz Lampen (112, 113) zu abnehmbarer Montierung an einer Tragkonstruktion mit Rohrelementen zur Unterstützung der beiden Lampen (112, 113), wobei der Satz Lampen (112, 113) zwei Lampen (112, 113) umfasst, und jede der Lampen (112, 113) folgendes umfasst:
ein Gehäuse (114, 115), das eine Aussenfläche und eine Innenkammer definiert,
ein elektrisch versorgtes lichterzeugendes Mittel zur Erzeugung sichtbaren Lichts einer spezifischen Wellenlänge oder eines spezifischen Wellenlängenbereichs, wobei das lichterzeugende Mittel innerhalb der Innenkammer des Gehäuses (114, 115) aufgenommen und vom Gehäuse (114, 115) unterstützt wird,
ein Batterieversorgungsmittel zur Versorgung des lichterzeugenden Mittels mit Strom,
ein schaltbares elektrisches Steckermittel, das zwischen einem ersten und einem zweiten Zustand schaltbar ist, wobei das elektrische Steckermittel eine elektrisch leitende Verbindung zwischen dem Batterieversorgungsmittel und dem lichterzeugenden Mittel im ersten Zustand zur Versorgung des lichterzeugenden Mittels mit Strom aus dem Batterieversorgungsmittel herstellt, und wobei das schaltbare elektrische Steckermittel im zweiten Zustand die elektrisch leitende Verbindung unterbricht,
wobei das lichterzeugende Mittel durch die Versorgung des lichterzeugenden Mittels mit Strom zur Ausstrahlung des sichtbaren Lichts der Lampe eingerichtet ist,
ein Befestigungsmittel zu abnehmbarer Befestigung und Montierung der Lampe gegenüber dem Rohrelement, wobei das Befestigungsmittel aus der Aussenfläche des Gehäuses (114, 115) vorsteht,
ein Aussengehäuseteil (116, 117), das aus dessen Aussenfläche vorsteht und Bemessungen hat, die den Bemessungen eines Segments des Rohrelements ähnlich sind, und
wobei das Befestigungsmittel und das Aussengehäuseteil (116, 117) auf Abstand voneinander gehalten sind,
wobei die beiden Lampen (112, 113) des Satzes Lampen (112, 113) dazu eingerichtet sind, miteinander verbunden zu werden, um das Befestigungsmittel und das Aussengehäuseteil (116, 117) der einen Lampe (112, 113) mit dem Aussengehäuseteil (116, 117) bzw. dem Befestigungsmittel der anderen Lampe zusammenarbeiten zu lassen.

17. Satz Lampen (112, 113) nach Anspruch 16, dadurch gekennzeichnet, dass jede der Lampen (112, 113) des Satzes Lampen (112, 113) jedes der Merkmale der Lampe nach einem der Ansprüche 2 bis 15 umfasst.

## Revendications

1. Phare (110) pour le montage démontable sur une structure supportante comprenant un élément tubulaire pour supporter ledit phare, ledit phare comprenant:
un logement (114, 115) définant une surface extérieure et une chambre intérieure,
un moyen de production de lumière actionné électriquement pour produire de la lumière visible d'une longueur d'onde spécifique ou d'une gamme de longueur d'onde spécifique, ledit moyen de production de lumière étant reçu à l'intérieur de ladite chambre dudit logement (114, 115) et étant supporté par ledit logement (114, 115),
un moyen d'alimentation par batterie pour l'alimentation en puissance électrique audit moyen de production de lumière,
un moyen de connexion électrique changeable étant changeable entre un premier et un deuxième état, ledit moyen de connexion électrique changeable créant de la connexion conductive électrique à partir dudit moyen d'alimentation par batterie audit moyen de production de lumière dans ledit premier état pour l'alimentation en puissance électrique à partir dudit moyen d'alimentation par batterie audit moyen de production de lumière, et ledit moyen de connexion électrique changeable interrompant ladite connexion conductive électrique dans ledit deuxième état,
ledit moyen de production de lumière étant adapté pour irradier ladite lumière visible dudit phare à travers l'alimentation en puissance électrique audit moyen de production de lumière,
un moyen de fixation pour, de manière démontable, fixer et monter ledit phare relatif audit élément tubulaire, ledit moyen de fixation étant en saillie de ladite surface extérieure dudit logement (114, 115),
un composant extérieur de logement (116, 117) en saillie de ladite surface extérieure de celui-ci et ayant des dimensions ressemblant aux dimensions d'un segment dudit élément tubulaire, et
ledit moyen de fixation et ledit composant extérieur de logement (116, 117) étant espacés l'un par rapport à l'autre et arrangés relatifs à ladite surface extérieure dudit logement (114, 115) de manière à permettre audit moyen de fixation et audit composant extérieur de logement (116, 117) à coopérer avec un composant extérieur de logement similaire (116, 117) et un moyen de fixation similaire, respectivement, d'un phare supplémentaire de structure similaire pour permettre auxdits deux phares (112, 113) d'être joints l'un à l'autre.

2. Phare (110) selon la revendication 1, ladite surface extérieure dudit logement (114, 115) constituant une moitie d'une surface fermée, continue et convexe, l'autre moitié étant constituée par la surface extérieure du logement (114, 115) dudit phare supplémentaire, et ledit moyen de fixation et ledit composant extérieur de logement (116, 117) dudit phare étant adapté à coopérer avec ledit composant similaire extérieur du logement (116, 117) et ledit moyen de fixation similaire, respectivement, dudit phare supplémentaire pour créer ladite surface extérieure fermée, continue et convexe.

3. Phare selon la revendication 2, ladite surface fermée, continue et convexe étant constituée par la surface extérieure sphérique, cubique, rhombique ou de corps similaires ou de combinations de ceux-ci.

4. Phare selon l'une quelconque des revendications 1 à 3, ledit logement (114, 115) étant fait de matière plastique et comprenant une vitre transparente à la lumière pour l'irradiation de ladite lumière visible produite par ledit moyen de production de lumière actionné électriquement.

5. Phare selon l'une quelconque des revendications 1 à 4, ledit moyen de production de lumière actionné électriquement étant constitué d'une ampoule à incandescence, d'une diode lumineuse ou d'une source similaire de production de lumière.

6. Phare selon l'une quelconque des revendications 1 à 5, ledit moyen d'alimentation par batterie étant constitué d'une ou plusieures batteries, telles que des batteries conventionnelles ou alternativement des batteries rechargeables.

7. Phare selon l'une quelconque des revendications 1 à 6, ledit moyen de connexion électrique changeable comprenant un interrupteur et des fils électriques mutuellement connectant ledit moyen d'alimentation par batterie et ledit moyen de production de lumière actionné électriquement, à travers ledit interrupteur.

8. Phare selon la revendication 7, ledit interrupteur étant constitué par un interrupteur "on/off' à commande manuelle.

9. Phare selon la revendication 7, ledit interrupteur étant constitué par un microinterrupteur en saillie de ladite surface extérieure dudit logement (114, 115), de manière à pouvoir être commandé à travers le contact avec ledit élément tubulaire pour amener ledit moyen d'alimentation par batterie à alimenter ledit moyen de production de lumière actionné électriquement avec de la puissance électrique à travers ledit microinterrupteur, pourvu que ledit phare est supporté par ledit élément tubulaire.

10. Phare selon la revendication 7, ledit interrupteur étant constitué par un microinterrupteur en saillie de ladite surface extérieure dudit logement (114, 115), de manière à être commandée à travers le contact avec la surface extérieure du logement (114, 115) dudit phare supplémentaire pour amener l'alimentation en puissance électrique à partir dudit moyen d'alimentation par batterie audit moyen de production de lumière actionné électriquement à travers ledit microinterrupteur à être mis hors circuit, pourvu que ledit phare et ledit phare supplémentaire sont joints.

11. Phare selon la revendication 7, ledit interrupteur étant constitué par un interrupteur à languette, et ledit moyen de connexion électrique changeable comprenant en outre un élément magnétique logé à l'intérieur dudit logement (114, 115), ledit interrupteur à languette étant adapté à être commandé par moyens d'un simple élément magnétique dudit phare supplémentaire pour amener l'alimentation en puissance électrique à partir dudit moyen d'alimentation par batterie audit moyen de production de lumière actionné électriquement à être mis hors circuit, pourvu que ledit phare et ledit phare supplémentaire sont joints ensemble, et ledit élément magnétique étant adapté à coopérer avec un interrupteur à languette similaire dudit phare supplémentaire pour amener l'alimentation en puissance électrique à partir du moyen d'alimentation par batterie dudit phare supplémentaire au moyen de production de lumière actionné électriquement dudit phare supplémentaire à être mis hors circuit, pourvu que ledit phare et ledit phare supplémentaire sont joints ensemble.

12. Phare selon la revendication 4, ledit composant extérieur de logement (116, 117) comportant ladite vitre transparente à la lumière et lesdits moyens de fixation étant constitués par un moyen d'accouplement récepteur (118, 119), ledit moyen d'accouplement récepteur (118, 119) étant adapté à couvrir une vitre transparente à la lumière dudit composant similaire extérieur du logement (116, 117) dudit phare supplémentaire, et ladite vitre transparente à la lumière étant adaptée à être couverte d'un moyen d'accouplement récepteur similaire (118, 119) dudit phare supplémentaire, pourvu que ledit phare et ledit phare supplémentaire sont joints ensemble.

13. Phare selon l'une quelconque des revendications 1 à 12, ledit phare étant un phare à bicyclette destiné à être monté sur un tube essentiellement horisontal d'un guidon, et ledit moyen de production de lumière actionné électriquement produisant de la lumière blanche ou jaune.

14. Phare selon l'une quelconque des revendications 1 à 12, ledit phare étant un phare à bicyclette destiné à être monté sur une barre essentiellement verticale sur laquelle est monté une selle de la bicyclette, ainsi que ledit moyen de production de lumière actionné électriquement produisant de la lumière rouge.

15. Phare selon l'une quelconque des revendications 1 à 14, ledit moyen de production de lumière actionné électroniquement étant adapté à produire de la lumière de manière continue ou, alternativement, de manière intermittente.

16. Ensemble de phares (112, 113) pour le montage démontable sur une structure supportante comportant des éléments tubulaires pour supporter lesdits phares (112, 113), ledit ensemble de phares (112, 113) comprenant deux phares (112, 113), chacun desdits phares (112, 113) comprenant:
un logement (114, 115) définant une surface extérieure et une chambre intérieure,
un moyen de production de lumière actionné électriquement pour produire de la lumière visible d'une longueur d'onde spécifique ou d'une portée spécifique de longueur d'onde, ledit moyen de production de lumière étant reçu à l'intérieur de ladite chambre intérieure dudit logement (114, 115) et étant supporté par ledit logement (114, 115),
un moyen d'alimentation par batterie pour alimenter ledit moyen de production de lumière avec de la puissance électrique,
un moyen de connexion électrique changeable étant changeable entre un premier et un deuxième état, ledit moyen de connexion électrique changeable créant une connexion conductive électrique à partir dudit moyen d'alimentation par batterie audit moyen de production de lumière dans ledit premier état pour l'alimentation en puissance électrique à partir dudit moyen d'alimentation par batterie audit moyen de production de lumière, et ledit moyen de connexion électrique changeable coupant le circuit de ladite connexion électrique conductive dans ledit deuxième état,
ledit moyen de production de lumière étant adapté à irradier ladite lumière visible dudit phare à travers l'alimentation en puissance électrique audit moyen de production de lumière,
un moyen de fixation pour, de manière démontable, fixer et monter ledit phare relatif audit élément tubulaire, ledit moyen de fixation étant en saillie de ladite surface extérieure dudit logement (114, 115),
un composant de logement extérieur (116, 117) en saillie de ladite surface extérieur de celui-ci et ayant des dimensions ressemblant aux dimensions d'un segment dudit élément tubulaire, et
ledit moyen de fixation et ledit composant extérieur de logement (116, 117) étant espacés l'un par rapport à l'autre,
lesdits deux phares (112, 113) dudit ensemble de phares (112, 113) étant adaptés à être joints l'un à l'autre de manière à permettre ledit moyen de fixation et ledit composant extérieur de logement (116, 117) de l'un desdits phares (112, 113) à coopérer avec ledit composant extérieur de logement (116, 117) et ledit moyen de fixation, respectivement, de l'autre phare.

17. Ensemble de phares (112, 113) selon la revendication 16, chacun desdits phares (112, 113) dudit ensemble de phares (112, 113) comprenant l'un quelconque des traits charactéristiques du phare selon l'une quelconque des revendications 2 à 15.
